# EUROPEAN PATENT APPLICATION

(11) **EP 1 241 235 A2**
(43) Date of publication of application: **18.09.2002**
(21) Application number: 02290626.7
(22) Date of filing: 12.03.2002
(51) Int. Cl.: C09D 5/44, C25D 13/06

(54) **Method of cationic electrodeposition coating and coated article obtained thereby**

(30) Priority: 13.03.2001 JP 2001070198; 13.03.2001 JP 2001070199
(71) Applicant: Nippon Paint Co., Ltd., Osaka-shi, Osaka 531-8511 (JP)
(72) Inventor: Sakamoto, Hiroyuki, Kobe-shi, Hyogo 658-0032 (JP); Kawanami, Toshitaka, Kawabe-gun, Hyogo 666-0261 (JP); Tanaka, Hidenori, Amagasaki-shi, Hyogo 661-0033 (JP); Kawakami, Ichiro, Takatsuki-shi, Osaka 569-1044 (JP)
(74) Representative: Hubert, Philippe

(57) **Abstract**

It is an object of the present invention to provide a cationic electrocoating method capable of producing a coating film with high filiform-rust resistance, corrosion resistance, and rust prevention and a coated article obtainable by the method.

A cationic electrocoating method comprising electrocoating a surface of an aluminum substrate with a cationic electrodeposition coating composition,
wherein said aluminum substrate is subjected to a chemical conversion with a surface treating reagent not containing a heavy metal, and
wherein said cationic electrodeposition coating composition contains a sulfonium- and propargyl-containing resin composition.

A cationic electrocoating method comprising electrocoating a surface of an aluminum substrate with a cationic electrodeposition coating composition,
wherein said aluminum substrate is not subjected to a chemical conversion with a surface treating reagent, and
wherein said cationic electrodeposition coating composition contains a sulfonium- and propargyl-containing resin composition.

A coated article obtainable by the above cationic electrocoating method.

## Description

### TECHNICAL FIELD

The present invention relates to a cationic electrocoating method and a coated article obtainable thereby and more particularly to a cationic electrocoating method of an aluminum substrate and a coated article obtainable by the method.

### BACKGROUND ART

Aluminum substrates, such as aluminum and aluminum alloys, are lightweight, easy to process, and good in corrosion resistance and rust prevention so that these are processed into various shapes such as plate, foil, bar and rod and used in a large variety of applications ranging from comparatively small articles, such as home utensils and sundry goods, to large articles, such as lumbers, sails, automotive bodies and parts, and so forth.

For capacitating additional corrosion resistance and rust prevention to such an aluminum substrate, the substrate is subjected to cationic electrocoating to form a cationic electrodeposited coating film on its surface. This cationic electrocoating method generally comprises cleaning the aluminum substrate by degreasing in the first place, then forming a chemical conversion coat on the surface using a surface treating reagent, and thereafter proceeding a cationic electrocoating to build up a multilayer electrodeposited coating film on the chemical conversion film. By forming a multilayer film composed of a conversion film and an electrodeposited coating film on the surface of an aluminum substrate in this manner, excellent corrosion resistance and rust prevention can be obtained.

However, the surface treating reagent is a material containing a heavy metal, such as chromium ion, and the use thereof is restricted of late because of the risk for environmental pollution. Therefore, the method using a chromium ion-free surface treating reagent and the method comprising applying an electrocoating directly to the degreased aluminum substrate surface omitting such a surface treatment have been tried recently.

However, the aluminum substrate obtained by cationic electrocoating using a chromium ion-free surface treating reagent is, in fact, excellent in corrosion resistance but has the problem of poor filiform-rust resistance and, therefore, the technology has not been commercially applicable.

Moreover, if electrodeposition coating is carried out without prior surface treating, the poor adhesion between the aluminum substrate and the electrodeposited coating film results in the problem of poor filiform-rust resistance and low corrosion resistance, so that the method has not been commercially applicable.

### SUMMARY OF THE INVENTION

It is an object of the present invention to provide a cationic electrocoating method capable of producing a coating film with high filiform-rust resistance, corrosion resistance, and rust prevention and a coated article obtainable by the method.

The first aspect of the present invention relates to a cationic electrocoating method comprising electrocoating a surface of an aluminum substrate with a cationic electrodeposition coating composition,
wherein said aluminum substrate is subjected to a chemical conversion with a surface treating reagent not containing a heavy metal, and
wherein said cationic electrodeposition coating composition contains a sulfonium- and propargyl-containing resin composition. Preferably, said heavy metal is chromium.

The second aspect of the present invention relates to a cationic electrocoating method comprising electrocoating a surface of an aluminum substrate with a cationic electrodeposition coating composition,
wherein said aluminum substrate is not subjected to a chemical conversion with a surface treating reagent, and
wherein said cationic electrodeposition coating composition contains a sulfonium- and propargyl-containing resin composition.

Preferably, the surface of the aluminum substrate is degreased.

It is preferred that the cationic electrodeposition coating composition contains 5 to 400 mmol of the sulfonium group and 10 to 495 mmol of the propargyl group per 100 g solids of the resin composition and the total content of the sulfonium and propargyl groups is not more than 500 mmol per 100 g solids. It is more preferred that the cationic electrodeposition coating composition contains 5 to 250 mmol of the sulfonium group and 20 to 395 mmol of the propargyl group per 100 g solids of the resin composition and the total content of the sulfonium and propargyl groups is not more than 400 mmol per 100 g solids.

Furthermore, the resin composition preferably comprises an epoxy resin as a skeleton. The epoxy resin is more preferably a novolac cresol epoxy resin or a novolac phenol epoxy resin and has a number average molecular weight of 700 to 5000.

The present invention also relates to a coated article obtainable by the above cationic electrocoating methods.

### DETAILED DESCRIPTION OF THE INVENTION

The cationic electrocoating method according to the first aspect of the present invention is the cationic electrocoating method comprising electrocoating a surface of an aluminum substrate with a cationic electrodeposition coating composition, wherein said aluminum substrate is subjected to a chemical conversion with a surface treating reagent not containing a heavy metal, and wherein said cationic electrodeposition coating composition contains a sulfonium- and propargyl-containing resin composition.

The aluminum substrate for use in the cationic electrocoating method according to the first aspect of the present invention, is not particularly restricted, but includes alloys for expanding and alloys for casting, for example. The alloys for expanding and alloys for casting can respectively be roughly divided into non-heat-treated alloys and heat-treated alloys, and as said non-heat-treated alloys, there can specifically be mentioned pure aluminum, aluminum-manganese alloy, aluminum-silicon alloy, aluminum-magnesium alloy, etc., and as said heat-treated alloys, there can specifically be mentioned aluminum-copper alloy, aluminum-magnesium-silicon alloy, and aluminum-zinc-magnesium alloy, etc.

For use in the cationic electrocoating method according to the first aspect of the present invention, the heavy metal which is not contained in said surface treating reagent may specifically be chrominum and as a specific example of the surface treating reagent containing chromium, there can be mentioned a reagent comprising a chromium chromate composed of a mixture of chromium ions such as hexavalent chromium ion (Cr⁶⁺), available on reduction of chromium trioxide, and trivalent chromium ion (Cr³⁺).

The above surface treating reagent not containing the heavy metal is not particularly restricted, but specifically includes surface treating reagents of the phosphate, oxide film, and so forth. As examples of the phosphate surface treating reagent, there can be mentioned a zinc phosphate surface treating reagent and an iron phosphate surface treating reagent. The method for forming a conversion coat on a substrate using said zinc phosphate surface treating reagent is not particularly restricted, but may for example comprise dipping the substrate in said treating reagent at 20 to 40°C. The concentration of the zinc phosphate surface treating reagent and the immersion time can be suitably selected according to the desired coat weight. Moreover, for leveling the substrate surface, the treatment with said zinc phosphate surface treating reagent is preferably preceded by a pre-conversion treatment using a surface conditioner to homogenize the substrate surface in terms of electric resistance value.

As the oxide film surface treating reagent mentioned above, there can be mentioned a zirconium oxide surface treating reagent, a titanium oxide surface treating reagent, and a vanadium oxide surface treating reagent, among others. Furthermore, the surface of the aluminum substrate may be subjected to almite/boehmite treatment by such a technique as anodic oxidation.

The method of forming a conversion coat with said oxide film surface treating reagent is almost the same as the above method using said zinc phosphate surface treating reagent. Furthermore, from the viewpoint of leveling the substrate surface, the treatment with said oxide film surface treating reagent is preferably preceded by an etching operation for the substrate surface with an acid solution.

Said process for forming the conversion coat may be a one-step process using only one kind of said surface treating reagent or comprise two or more steps using two or more kinds of said surface treating reagents.

A cationic electrocoating method according to the second aspect of the present invention is a cationic electrocoating method comprising electrocoating a surface of an aluminum substrate with a cationic electrodeposition coating composition, wherein said aluminum substrate is not subjected to a chemical conversion with a surface treating reagent, and wherein said cationic electrodeposition coating composition contains a sulfonium- and propargyl-containing resin composition.

The aluminum substrate for use in the cationic electrocoating method according to the second aspect of the present invention is not particularly restricted, but includes the same substrates as mentioned for the first aspect of the invention, for instance.

In the cationic electrocoating method according to the second aspect of the present invention, the surface of said aluminum substrate is not subjected to a chemical conversion with a surface treating reagent.

Moreover, in the cationic electrocoating method according to the invention, the surface of said aluminum substrate may be degreased or not degreased but is preferably degreased from the viewpoint of washing the substrate surface and leveling of the surface condition. This degreasing can be made with an aqueous alkali solution, for instance.

Moreover, the surface of the aluminum substrate may be etched to remove the aluminum oxide and other oxide films intimately formed thereon.

The cationic electrodeposition coating composition for use in the cationic electrocoating method of the invention contains a sulfonium- and propargyl-containing resin composition. The component resins of such resin composition may have both a sulfonium group and a propargyl group per molecule but this is not absolutely necessary. Thus, for example, the component resins may have only sulfonium groups or only propargyl groups per molecule. In the latter case, however, the whole resin composition should have both of these two kinds of curable functional groups. Thus, said resin composition may comprise any of a sulfonium- and propergyl-containing resin, a mixture of a resin having only sulfonium groups and a resin having only propargyl groups, and a mixture of all of said kinds of resins. It is herein defined in the above sense that the resin composition contained in the cationic electrodeposition coating composition for use in the invention has both sulfonium and propargyl groups.

The sulfonium groups mentioned above are hydratable functional groups of said resin composition. When an electric voltage or current beyond a certain level is applied for electrocoating, the sulfonium group is electrically reduced on the electrode to lose its ionicity and the resin is irreversibly rendered nonconductive. It is probably for this reason that the cationic electrodeposition coating composition for use in the invention may exhibit a high degree of throwing power.

Moreover, it is conjectured that, in this electrocoating process, the electrode reaction is induced, and the resulting hydroxide ion is captured by the sulfonium group, whereby the electrolytically generated base is formed in the electrodeposited coat.

The sulfonium content of the resin composition in the cationic electrodeposition coating composition according to the invention is 5 to 400 mmol per 100 g solids of said resin composition provided that the condition to be described hereunder for the combined sulfonium and propargyl content is satisfied. If the sulfonium content is less than 5 mmol/100 g, neither sufficient throwing power nor sufficient curability will be expressed and, in addition, the hydratability and bath stability will also be deteriorated. If the level of 400 mmol/100 g is exceeded, the deposition of the coat on the substrate surface will be deteriorated. As to the sulfonium content referred to above, a preferred content can be set according to the resin skeleton to be used. For example, in the case of a novolac phenol epoxy resin or a novolac cresol epoxy resin, the sulfonium content is preferably 5 to 250 mmol, more preferably 10 to 150 mmol, per 100 g solids of the resin composition.

It is also considered that the propargyl group which shows low reactivity upon heating is comparatively low in the electrodeposited coat can be transformed to an allene bond which shows high reactivity upon heating.

The propargyl groups of the resin composition in said cationic electrodeposition coating composition are transformed to allene bonds by the electrolytically generated base in the electrocoating process, whereby the reactivity is increased. In this manner, a curing system is established in the cationic electrodeposition coating composition of the invention. Moreover, though the reason remains to be unknown, the concurrent existence of propargyl and sulfonium groups results in a further improvement in the throwing power of the cationic electrodeposition coating composition.

The propargyl content of the resin composition in said cationic electrodeposition coating composition is 10 to 495 mmol per 100 g solids of said resin composition provided that the condition to be described hereunder for the combined sulfonium and propargyl content is satisfied. If the propargyl content is less than 10 mmol/100 g, neither sufficient throwing power nor sufficient curability will be expressed. If the content exceeds 495 mmol/100 g, when the resin is used as the cationic electrodeposition coating, the hydration stability will be adversely affected. As to the propargyl content referred to above, a preferred content can be set according to the resin skeleton to be used. For example, in the case of a novolac phenol epoxy resin or a novolac cresol epoxy resin, the propargyl content is preferably 20 to 395 mmol per 100 g solids of the resin composition.

The resin to serve as the skeleton of the resin composition in said cationic electrodeposition coating composition is not particularly restricted, but an epoxy resin can be used suitably. The preferred epoxy resin is one having at least two epoxy groups per molecule and includes such polyepoxy resins as epi-bis-epoxy resin and as derived by chain extension with a diol, a dicarboxylic acid, a diamine, or the like; epoxidized polybutadiene; novolac phenol polyepoxy resin; novolac cresol polyepoxy resin; polyglycidyl acrylate; polyglycidyl ethers of aliphatic polyols or polyether polyols; polyglycidyl esters of polybasic carboxylic acids; and so forth. Among these, in view of the ease of polyfunctionalization for enhanced curability, novolac phenol polyepoxy resin, novolac cresol polyepoxy resin, and polyglycidyl acrylate are preferred. Furthermore, a portion of said epoxy resin may be a monoepoxy resin.

The resin composition contained in said cationic electrodeposition coating composition comprises a resin having said epoxy resin as a skeleton and has a number average molecular weight of 500 to 20000. If the number average molecular weight is less than 500, the coating efficiency in cationic electrocoating is decreased. On the other hand, if it exceeds 20000, it will be impossible to form a satisfactory coat on the substrate surface. It is possible to select a preferred number average molecular weight according to the resin skeleton. For example, in the case of a novolac phenol epoxy resin or a novolac cresol epoxy resin, the preferred number average molecular weight is 700 to 5000.

The total content of sulfonium and propargyl groups in said resin composition is not more than 500 mmol per 100 g solids of the resin composition. If the total content exceeds 500 mmol, there may be cases in which the objective resin cannot be practically obtained or the desired performance characteristics are not obtained. As to said total content of sulfonium and propargyl groups in the resin composition, it is possible to select a preferred content according to the resin skeleton to be used. For example, in the case of a novolac phenol epoxy resin or a novolac cresol epoxy resin, the total content is preferably not more than 400 mmol/100 g.

Some of the propargyl groups of the resin composition in said cationic electrodeposition coating composition may be converted to acetylides. The acetylide is an acetylene bond-containing metal compound resembling a salt. When some of the propargyl groups of said resin composition are converted to acetylides, said propargyl content is preferably 0.1 to 40 mmol per 100 g solids of the resin composition. If it is less than 0.1 mmol, the effect of conversion to acetylides will not be fully expressed. If it exceeds 40 mmol, the conversion to acetylides will be difficult. The content can be suitably selected from a certain preferred range according to the metal species to be used.

When some of said propargyl groups are converted to acetylides, the species of metal, which contained in the propargyl groups converted to acetylides, is not particularly restricted only provided that it is a metal exhibiting catalyst activity. Thus, for example, transition metals such as copper, silver and barium can be mentioned. Among these, copper and silver are preferred from the viewpoint of applicability to the environment and copper is more preferred from the viewpoint of availability. When the propargyl group is to be converted to an acetylide with copper, the propargyl content to be converted to the acetylide in said resin composition is more preferably 0.1 to 20 mmol per 100 g solids of the resin composition.

Through this conversion of some of the propargyl groups of the resin composition in said cationic electrodeposition coating composition to acetylides, a curing catalyst can be introduced into the resin. When this is done, an organic transition metal complex, which is generally not readily soluble or dispersible in organic solvents and water, need not be added directly to the coating. Thus, a transition metal can be easily introduced after a conversion to acetylides and, therefore, any transition metal compound which is difficult to be dissolved can be used for the coating composition. Furthermore, like the case in which a transition metal salt of an organic acid is employed, the presence of such an organic acid salt as an anion in the electrodeposition bath can be avoided and, moreover, the metal ion is not removed by ultrafiltration, with the result that both bath control and design of a cationic electrodeponsition coating are facilitated.

In the resin composition for use in said cationic electrodeposition coating composition, C-C double bonds may optionally be contained. The above C-C double bond is so highly reactive that a curability can further be improved.

The C-C double bond content is preferably 10 to 485 mmol per 100 g solids of the resin composition provided that the condition to be described hereunder for the combined total propargyl and C-C double bond content is satisfied. If the C-C double bond content is less than 10 mmol/100 g, no sufficient curability will be expressed. If it exceeds 485 mmol/100 g, the hydration stability of a cationic electrodeposition coating comprising the composition will be adversely affected. As to the C-C double bond content referred to above, a preferred content can be set according to the resin skeleton to be used. For example, in the case of a novolac phenol epoxy resin or a novolac cresol epoxy resin, the preferred content is 20 to 375 mmol per 100 g solids of the resin composition.

In the case where the resin composition contains said C-C double bond, the combined total propargyl and C-C double bond content is preferably within the range of 80 to 450 mmol per 100 g solids of the resin composition. If the total content is less than 80 mmol, curability may tend to be insufficient. If it exceeds 450 mmol, the sulfonium content will be too low to insure adequate throwing power. As to the combined total propargyl and C-C double bond content, a preferred content can be set according to the resin skeleton to be used. For example, in the case of a novolac phenol epoxy resin or a novolac cresol epoxy resin, the more preferred range for said combined total content is 100 to 395 mmol.

Furthermore, when the resin composition contains said C-C double bonds, the combined total content of sulfonium group, propargyl group, and C-C double bond is preferably not more than 500 mmol per 100 g solids of the resin composition. If this total content exceeds 500 mmol/100 g, the resin may not be actually obtained or the objective performance characteristics may not be obtained. As to the combined total content of sulfonium group, propargyl group, and C-C double bond, a preferred content can be set according to the resin skeleton to be used. For example, in the case of a novolac phenol epoxy resin or a novolac cresol epoxy resin, it is more preferably not more than 400 mmol/100 g.

The resin composition to be contained in said cationic electrodeposition coating composition can be suitably produced by, for example, the process which comprises (i) a step of reacting an epoxy resin having at least two epoxy groups per molecule with a compound having both a functional group reactive with the epoxy group and a propargyl group to give a propargyl-containing epoxy resin composition and (ii) a step of reacting a sulfide/acid mixture with the residual epoxy group in the propargyl-containing epoxy resin composition obtained in step (i) to introduce a sulfonium group.

The above-mentioned compound having both a functional group reactive with the epoxy group and a propargyl group (hereinafter referred to as "compound (A)") is a compound having both a functional group reactive with the epoxy group such as a hydroxyl group or a carboxyl group, and a propargyl group for instance, and as specific examples, propargyl alcohol and propargylic acid can be mentioned. From the viewpoint of availability and simple reaction, propargyl alcohol is preferred.

When C-C double bonds are to be introduced, if necessary, into the resin composition of said cationic electrodeposition coating composition, a compound having both a functional group reactive with the epoxy group and a C-C double bond (hereinafter referred to as "compound (B)") is used in conjunction with said compound (A) in the above step (i). The compound (B) mentioned above may be a compound having both a functional group reactive with the epoxy group such as a hydroxyl group or a carboxyl group and a C-C double bond for instance. Specifically, in the case where the functional group reactive with the epoxy group is a hydroxyl group, there can be mentioned such compounds as 2-hydroxyethyl acrylate, 2-hydroxyethyl methacrylate, hydroxypropyl acrylate, hydroxypropyl methacrylate, hydroxybutyl acrylate, hydroxybutyl methacrylate, allyl alchohol, and methacryl alcohol, among others. In the case where the functional group reactive with the epoxy group is a carboxyl group, there can be mentioned acrylic acid, methacrylic acid, ethacrylic acid, crotonic acid, maleic acid, phthalic acid, itaconic acid; ethyl maleate, ethyl fumarate, ethyl itaconate, and half-esters such as mono(meth)acryloyloxyethyl succinate, mono(meth)acryloxyoxyethyl phthalate, etc.; synthetic unsaturated fatty acids such as oleic acid, linoleic acid, ricinolic acid, etc.; and naturally-occurring unsaturated fatty acids such as linseed oil, soybean oil and so on.

In the above step (i), said epoxy resin having at least two epoxy groups per molecule is reacted with said compound (A) to give a propargyl-containing epoxy resin composition or with said compound (A) and, if necessary, compound (B) to give a propargyl- and C-C double bond-containing epoxy resin composition. In the latter case, in the step (i), said compound (A) and compound (B) may first be mixed and then submitted to the reaction or said compound (A) and compound (B) may be independently submitted to the reaction. A functional group reactive with the epoxy group in said compound (A) and a functional group reactive with the epoxy group in said compound (B) may be the same or different.

The formulating ratio of said compound (A) and compound (B) to be reacted in the above step (i) can be selected so that the desired contents of functional groups, said propargyl and C-C double bond content as an example, may be introduced.

The reaction conditions to be employed in the above step (i) may usually be room temperature or 80 to 140°C and several hours. If necessary, the known reaction-promoting agents such as a catalyst and a solvent can be used. The end-point of reaction can be confirmed by determining the epoxy equivalent, and the introduced functional groups can be identified by analysis of the nonvolatile fraction or instrumental analysis of the resulting resin composition. The reaction product obtainable in the above manner is generally either a mixture of epoxy resins having one or a plurality of propargyl groups or a mixture of epoxy resins having one or a plurality of both propargyl groups and C-C double bonds. In this sense, a propargyl-containing resin composition or a propargyl- and C-C double bond-containing epoxy resin composition is obtained in the above step (i).

In step (ii), the residual epoxy groups in the propargyl-containing epoxy resin composition obtained in step (i) are caused to react with a sulfide/acid mixture for introduction of sulfonium groups. This introduction of sulfonium groups can be effected by the method which comprises causing the sulfide/acid mixture to react with the epoxy group to effect introduction of the sulfide and conversion thereof to the sulfonium group or the method which comprises introducing a sulfide and then converting the introduced sulfide to a sulfonium group with an acid, an alkyl halide, such as methyl fluoride, methyl chloride or methyl bromide, or the like reagent, if necessary, followed by anion exchange. In view of the availability of the reactant, the method using a sulfide/acid mixture is preferred.

The sulfide mentioned above is not particularly restricted, but includes aliphatic sulfides, mixed aliphatic-aromatic sulfides, aralkyl sulfides, and cyclic sulfides. Specifically, there can be mentioned diethyl sulfide, dipropyl sulfide, dibutyl sulfide, dihexyl sulfide, diphenyl sulfide, ethyl phenyl sulfide, tetramethylene sulfide, pentamethylene sulfide, thiodiethanol, thiodipropanol, thiodibutanol, 1-(2-hydroxyethylthio)-2-propanol, 1-(2-hydroxyethylthio)-2-butanol, and 1-(2-hydroxyethylthio)-3-butoxy-1-propanol, among others.

The acid mentioned above is not particularly restricted, but includes formic acid, acetic acied, lactic acid, propionic acid, boric acid, butyric acid, dimethylolpropionic acid, hydrochloric acid, sulfuric acid, phosphoric acid, N-acetylglycine, N-acetyl-β-alanine, and so forth.

The preferred mixing ratio of the above sulfide and the above acid in said sulfide/acid mixture is generally about (sulfide/acid) = 100/60 to 100/100 on a molar basis.

The reaction in said step (ii) can be carried out by mixing the propargyl-containing epoxy resin composition obtained in said step (i) and a calculated amount of, for example, said sulfide/acid mixture required to insure said sulfonium content with 5 to 10 molar equivalents of water based on the sulfide used and stirring the mixture usually at 50 to 90°C for several hours. The end-point of reaction can be confirmed by a residual acid value as a guideline being not more than 5. The introduction of sulfonium group to the resulting resin composition can be confirmed by potentiometric titration. The same procedure can be used also in the case where the sulfide is first introduced and then converted to the sulfonium group. In this connection, by carrying out introduction of the sulfonium group after introduction of the propargyl group, the decomposition of the sulfonium group on heating can be prevented.

In the case where some of the propargyl groups of the resin composition in said cationic electrodeposition coating composition are converted to acetylides, the propargyl-containing epoxy resin composition obtained in said step (i) is reacted with a metal compound to convert some of the propargyl groups of said epoxy resin composition to acetylides. The metal compound mentioned above is preferably a transition metal compound capable of forming an acetylide and, for example, includes complexes or salts of transition metals such as copper, silver and barium. Specifically, acetylacetonato-copper, copper acetate, acetylacetonato-silver, silver acetate, silver nitrate, acetylacetonato-barium, barium acetate, etc. can be mentioned. Among these, compounds of copper or silver are preferred from environmental points of view and compounds of copper are more preferred from availability points of view. For example, acetylacetonato-copper is advantageous in terms of the ease of bath control.

The conditions of said reaction for conversion of some of the propargyl groups to acetylides are usually 40 to 70°C and several hours. Progress of the reaction can be confirmed from coloration of the product resin composition and disappearance of the methine proton on the nuclear magnetic resonance spectrum, for instance. By confirming the point of time by which the desired proportion of the propargyl groups of the resin composition has been converted to acetylides, the reaction is then terminated. The reaction product thus obtained is generally a mixture of epoxy resins in which one or a plurality of propargyl groups have been converted to acetylides. Using the epoxy resin composition obtained in this manner in which some of the propargyl groups have been converted to acetylides, sulfonium groups can be introduced in said step (ii).

The step for conversion of some of the propargyl groups of the epoxy resin composition to acetylides and the step (ii) described above can be equated in reaction conditions and, therefore, the two steps can be carried out concurrently. This mode of carrying out the two steps concurrently is advantageous in that the production process can be simplified.

In this manner, a resin composition containing the propargyl and sulfonium groups, if necessary, as well as C-C double bond and/or acetylides derived from some of the propargyl groups, can be produced while decomposition of the sulfonium groups is prevented. Although an acetylide is explosive in dry state, the production method according to the invention is conducted in an aqueous medium and gives the objective product as a water-soluble composition, thus preventing the risk.

The cationic electrodeposition coating composition of the invention contains said resin composition. Since this resin composition is curable by itself, the cationic electrodeposition coating composition of the invention does not necessarily require the use of a curing agent. However, a curing agent may be used for further improved curability. As such curing agents, there can be mentioned compounds having a plurality of groups of at least one kind selected from propargyl and C-C double bond, for example those compounds obtainable by the addition reaction between a propargyl-containing compound, such as propargyl alcohol, or a C-C double bond-containing compound, such as acrylic acid, and a polyepoxide of e.g. novolac phenol, pentaerythritol tetraglycidyl ether, or the like.

The above cationic electrodeposition coating composition does not necessarily require a curing catalyst. However, when a further improvement in curability is required depending on conditions of the curing reaction, a routine transition metal compound and so on may be optionally added, if necessary. Such compounds are not particularly restricted, but those compounds which are obtainable by using a transition metal, such as nickel, cobalt, manganese, palladium or rhodium, in combination with a ligand compound, such as cyclopentadiene or acetylacetone, or a carboxylic acid, such as acetic acid, or the like, can be mentioned. The formulating amount of said curing catalyst is preferably 0.1 to 20 mmol per 100 g solids of the cationic electrodeposition coating composition.

An amine can be incorporated in said cationic electrodeposition coating composition. Incorporation of the amine results in an increased conversion of sulfonium to sulfide by electrolytic reduction in the electrodeposition process. The amine mentioned above is not particularly restricted, but includes amine compounds such as primary through tertiary monofunctional and polyfunctional aliphatic amines, alicyclic amines, and aromatic amines, among others. The preferred, among these, are water-soluble or water-dispersible amines, for example, alkylamines containing 2 to 8 carbon atoms, such as monomethylamine, dimethylamine, trimethyamine, triethylamine, propylamine, diisopropylamine, tributylamine, etc.; monoethanolamine, dimethanolamine, methylethanolamine, dimethylethanolamine, cyclohexylamine, morpholine, N-methylmorpholine, pyridine, pyrazine, piperidine, imidazoline, imidazole, and so forth. These may be used each independently or in a combination of two or more species. Because of the goodness in dispersion stability in water, hydroxylamines such as monoethanolamine, diethanolamine and dimethylethanolamine are preferred.

The above amine may be directly incorporated in said cationic electrodeposition coating composition. In the conventional neutralized amine type cationic electrodeposition coatings, addition of a free amine deprives the resin of the neutralizing acid to considerably deteriorate the stability of the electrodeposition bath but such an inhibition on bath stability is not induced in the present invention.

The preferred formulating amount of said amine is 0.3 to 25 meq per 100 g solids of the cationic electrodeposition coating composition. If it is less than 0.3 meq/100 g, there will be no sufficient contribution to throwing power. Exceeding 25 meq/100 g will not be rewarded with any additional effect but rather causes an economic disadvantage. The more preferred formulating amount is 1 to 15 meq/100 g.

In the above cationic electrodeposition coating composition, an aliphatic hydrocarbon-containing resin composition may be incorporated. Incorporation of such an aliphatic hydrocarbon-containing resin composition results in an improved impact resistance of the coating film to be obtained. The aliphatic hydrocarbon-containing resin composition that can be used includes resin compositions containing, based on 100 g solids of resin composition, 5 to 400 mmol of a sulfonium group, 80 to 135 mmol of a C₈₋₂₄ aliphatic hydrocarbon group optionally containing an unsaturated double bond within the chain, and 10 to 315 mmol of at least one of a propargyl group and an unsaturated double bond-terminated C₃₋₇ organic group, with the combined total of the sulfonium group, C₈₋₂₄ aliphatic hydrocarbon group optionally containing an unsaturated double bond within the chain, unsaturated double bond-terminated C₃₋₇ organic group and propargyl group being not more than 500 mmol per 100 g solids of the resin composition.

In incorporating an aliphatic hydrocarbon-containing resin composition in said cationic electrodeposition coating composition, it is preferable to insure that, per 100 g solids of the cationic electrodeposition coating composition, the amount of sulfonium group will be 5 to 400 mmol, that of the C₈₋₂₄ aliphatic hydrocarbon group optionally containing an unsaturated double bond within the chain will be 10 to 300 mmol, and that of the propargyl group and unsaturated double bond-terminated C₃₋₇ organic group combined will be 10 to 485 mmol, with the combined total of the sulfonium group, C₈₋₂₄ aliphatic hydrocarbon group optionally containing an unsaturated double bond within the chain, the propargyl group, and the unsaturated double bond-terminated C₃₋₇ organic group being not more than 500 mmol per 100 g solids of the cationic electrodeposition coating composition and the proportion of said C₈₋₂₄ aliphatic hydrocarbon group optionally containing an unsaturated double bond within the chain being 3 to 30 weight % of the resin solids in the cationic electrodeposition coating composition.

Referring to the above case in which an aliphatic hydrocarbon-containing resin composition is formulated in said cationic electrodeposition coating composition, if the sulfonium content is less than 5 mmol/100 g, neither sufficient throwing power nor sufficient curability will be obtained and, in addition, the hydratability and bath stability will be adversely affected. If it exceeds 400 mmol/100 g, the deposition of the coating on the substrate surface will be deteriorated. Furthermore, if the proportion of the C₈₋₂₄ aliphatic hydrocarbon group optionally containing an unsaturated double bond within the chain is less than 80 mmol/100 g, no sufficient improvement will be obtained in impact resistance. If it exceeds 350 mmol/100 g, the resin composition will not be easy to work with. Furthermore, if the combined total amount of the propargyl group and unsaturated double bond-terminated C₃₋₇ organic group is less than 10 mmol/100 g, no sufficient curability may be expected even when the composition is used in combination with other resin or a curing agent. If it exceeds 315 mmol/100 g, the impact resistance will not be sufficiently enhanced. The combined total amount of the sulfonium, C₈₋₂₄ aliphatic hydrocarbon group optionally containing an unsaturated double bond within the chain, propargyl, and unsaturated double bond-terminated C₃₋₇ organic group is not more than 500 mmol per 100 g solids of the resin composition. If the level of 500 mmol is exceeded, the objective resin may not be actually obtained or the desired performance characteristics may not be expressed.

If necessary, said cationic electrodeposition coating composition may contain other ingredients which are generally formulated in the conventional cationic electrodeposition coatings. Said other ingredients are not particularly restricted, but include the color pigment, pigment dispersant resin, surfactant, antioxidant, UV absorber, and like other coating additives.

The color pigment mentioned above is not particularly restricted, but includes color pigments such as titanium dioxide, carbon black, red iron oxide, etc; and such extender pigments as kaolin, clay, talc, etc., all of which are commonly formulated in cationic electrodeposition coatings. When such a color pigment is formulated in the cationic electrodeposition coating composition of the invention, the combined total formulating amount of the above color pigment and said rust inhibitor is preferably not more than 50 weight % based on the solids of the cationic electrodeposition coating composition. Regarding the method of mixing said color pigment with said resin composition, the method comprising dispersing said rust inhibitor into a pigment dispersing resin in advance to prepare a dispersion paste and mixing the paste with said resin composition can be mentioned as an example.

The cationic electrodeposition coating composition can be obtained by mixing said resin composition with said respective ingredients where necessary and dissolving or dispersing the mixture in water. For cationic electrocoating, the composition is preferably prepared as a bath containing 10 to 30% of nonvolatile matter. It is also preferably prepared so that the content of propargyl groups, C-C double bond, and sulfonium groups in the cationic electrodeposition coating composition will not deviate from the above-defined ranges of the resin composition.

The curing temperature of said cationic electrodeposition coating composition is preferably controlled at 130 to 220°C. When the curing temperature is lower than 130°C, the smoothness of the multilayer coating film obtained by further coating on the coating film formed from the cationic electrodeposition coating composition of the invention tends to be deteriorated. If the curing temperature is higher than 220°C, the poor curability of said multilayer coating film results in deterioration of coating film characteristics as well as the incidence of a color difference in the multilayer coating film after application of a top coating.

The cationic electrocoating method of the present invention comprises applying said cationic electrodeposition coating composition to the surface of the aluminum substrate described hereinbefore.

The above application can be carried out by, for example, the process in which said aluminum substrate as the cathode is immersed in said cationic electrodeposition coating composition and an electric voltage of, generally, 50 to 450 V is applied between the cathode and an anode. If the application voltage is less than 50 V, the electrodeposition will be insufficient. If it exceeds 450 V, the power consumption will be uneconomically too large. By using said cationic electrodeposition coating composition and applying an electric voltage at a level within the above-mentioned range, a homogeneous coat can be produced all over the substrate surface without a sharp buildup in coat thickness in the course of electrodeposition. The preferred bath temperature of said cationic electrodeposition coating composition at voltage application is usually 10 to 45°C. On the other hand, the duration of voltage application may generally be 2 to 4 minutes, although it depends on other conditions of electrodeposition.

In the above electrodeposition process, the electric resistance per unit volume of the above coat can be increased by applying a voltage between said aluminum substrate as the cathode and an anode and further applying a voltage to thus-deposited coat.

After completion of electrodeposition processs, the resulting electrodeposited coat is baked, either as it is or after cleaning with water, at a temperature of 120 to 260°C, preferably 160 to 220°C, for 10 to 30 minutes to complete the coating procedure. There may also be employed the two-coat, one-bake system in which thus-obtained electrodeposited coat is not cured but an intermediate uncured coating film is formed directly thereon using an intermediate coating to be described hereunder by so-called wet-on-wet technique and the uncured coating films are baked together in one step to give a multilayer coating film.

In the cationic electrocoating method according to the invention, the film thickness of the electrodeposited coating film after curing is preferably 10 to 25 µm. If it is less than 10 µm, corrosion resistance and rust prevention tend to be insufficient. The use of a film thickness in excess of 25 µm will result in a waste of the coating material and, hence, be uneconomical.

The coated article according to the invention is the article obtainable by the above cationic electrocoating methods.

If necessary, an intermediate coating film and/or a top coating film may be further formed on the surface of the coated article of the invention depending on requirements. The above intermediate coating film can be formed by applying an intermediate coating and the above top coating film can be formed by applying a top coating.

In the case where the coated article is an automotive shell plate, for instance, said intermediate coating film preferably has such performance characteristics as good adhesion, smoothness, image clarity, overbake resistance, and weather resistance, and the like. As an intermediate coating for forming such an intermediate coating film, a thermosetting coating agent comprising a binder and a curing agent is generally employed. The binder mentioned above includes acrylic resins, polyester resins, alkyd resins, and epoxy resins. The above curing agent can be selected from a broad range of substances according to the curable functional groups of the above binder, and includes amino resins, blocked isocyanates, aliphatic polycarboxylic acids and anhydrides thereof, and epoxy resins, and the like. The intermediate coating may be provided in various forms, such as a solvent-borne coating, a water-borne coating, an aqueous dispersion, a powder coating, and so forth.

The top coating preferably is satisfactory in finished appearance (image clarity, smoothness, gloss, etc.), weather resistance (gloss retention, color retention, chalking resistance, etc.), chemical resistance, water resistance, moisture resistance, and curability. As such top coatings, there can be mentioned solid color coatings for use as one-coat solid coatings, base coatings which can be applied by the two-coat, one-bake coating technique, and clear coatings. These top coatings are preferably thermosetting coatings comprising a binder and a curing agent. As the binder and curing agent for the top coating, the substances mentioned for said intermediate coatings can be used. Said solid color coatings may contain the well-known inorganic or organic color pigment, such as carbon black, phthalocyanine blue, titanium dioxide, and so forth. The base coatings may contain the well-known luster material, such as aluminum flakes, mica flakes, or the like, in addition to said inorganic or organic color pigment. On the other hand, said clear coatings usually do not contain a pigment but may be supplemented with said color pigment and/or luster material to the extent not detracting from clarity. Such top coatings may be any of water-borne, solvent-borne and powder coatings but are preferably formulated as water-borne or powder coatings for protection of the environment. In the case of a water-borne system, the carboxyl group of the binder is neutralized with an amine to make the binder water-soluble and in the case of a powder coating, the glass transition temperature is set higher than room temperature. In this manner, the respective application forms can be established.

Said intermediate coating and top coating may contain such additives as extender pigments, curing catalists, leveling agents, UV absorbers, and light stabilizers.

According to the application forms of said intermediate coating or said top coating, the coating techniques known to those skilled in the art can be employed. For example, spray coating, brush coating, dip coating, electrostatic coating, etc. can be mentioned. Particularly in the coating stage in an automotive body production line, the electrostatic coating method is preferably employed. With regard to the film thickness for the intermediate coating or the top coating and the conditions of heating after coating, too, the amounts and conditions suited to the respective coating species can be employed.

By superimposing the intermediate coating film and top coating film on the electrodeposited coating film obtained by the cationic electrocoating method of the invention, a multilayer coating film can be obtained.

The cationic electrocoating method according to the present invention is a cationic electrocoating method comprising electrocoating a surface of an aluminum substrate with a cationic electrodeposition coating composition containing a sulfonium- and proparygyl-containing resin composition, and the resulting electrodeposited coating film shows excellent corrosion resistance. This is probably because, in the course of electrocoating, the sulfur atom contained in the coating component forms a sulfur-aluminum covalent bond with the aluminum atom on the substrate surface.

A further possible reason is that, compared with the conventional cationic electrodeposition coating, the cationic electrodeposition coating composition containing said suflonium- and propargyl-containing resin composition provides a coating film which, by itself, is superior in rust resistance and corrosion resistance.

The cationic electrocoating method according to the first aspect of the present invention does not require a treatment of heavy metal-containing effluents, thus being free from risks for environmental pollutions and economical.

The cationic electrocoating method according to the second aspect of the invention does not require a surface treatment of aluminum substrates, thus contributing to improved productivity through process curtailment and energy savings.

### EXAMPLES

### Production Example 1 Preparation of a sulfonium- and propargyl-containing epoxy resin composition

A separable flask equipped with a stirrer, thermometer, nitrogen inlet pipe and reflux condenser was charged with 100.0 weight parts of Epototo YDCN-701 (epoxy equivalent: 200.4; cresol novolak epoxy resin, product of Toto Chemical), 23.6 weight parts of propargyl alcohol, and 0.3 weight part of dimethylbenzylamine and the temperature was raised to 105°C. The reaction was carried out for 3 hours to give a propargyl-containing resin composition with an epoxy equivalent of 1580. To this resin composition was added 2.5 weight parts of acetylacetonato-copper, and the reaction was carried out at 90°C for 1.5 hours. It was confirmed that some of the terminal hydrogen atoms of the added propargyl groups was disappeared by proton (¹H) NMR spectrometry (propargyl converted to acetylide: 14 mmol/100 g resin solids). The flask was then charged with 10.6 weight parts of 1-(2-hydroxyethylthio)-2,3-propanediol, 4.7 weight parts of glacial acetic acid, and 7.0 weight parts of deionized water and the reaction was carried out at a constant temperature of 75°C for 6 hours. After the residual acid value was confirmed to be not more than 5, 43.8 weight parts of deionized water was further added, whereby the objective resin composition solution was obtained. The concentration of solids in this mixture was 70.0 weight % and the sulfonium content was 28.0 mmol/100 g solids of the resin. The number average molecular weight (GPC, polystyrene equivalent) was 2443. This resin composition was further diluted with deionized water to finally give an aqueous solution of 15 weight % solids. In this manner, a cationic electrodeposition coating composition was obtained.

### Example 1

The lower half of an aluminum-magnesium alloy (5052) plate (75 x 150 x 0.8 mm) was ground with an air sander (manufactured by URYU Co., Type UP-25DB) at a max. speed of 9000 rpm, a pad. size of 125 mm, and a max. pressure of 6 kg/cm² and further ground evenly with sandpaper (product of Sankyo Rikagaku; high-pitch paper, grit 80, HAND type, size 125 mm). The ground part was cleaned with water to remove grindings and dried. Then, the plate was immersion-degreased with a degreasing agent (a 2 weight % aqueous solution of Surf Cleaner 53, product of Nippon Paint Co.) at 50°C for 160 seconds and, then, dipped in a surface conditioner (a 0.1 weight % aqueous solution of Surf Fine 5N-8 Architect, product of Nippon Paint Co.) at 25°C for 45 seconds. Thereafter, the plate was subjected to a chemical conversion with a zinc phosphate surface treating reagent (a 2 weight % aqueous solution of Surf Dyne SD5600, product of Nippon Paint Co.) at 45°C until a coating weight of 2.0 mg/m² had been attained to provide a substrate.

The cationic electrodeposition coating composition obtained in Production Example 1 was transferred to a stainless steel vessel, which was to serve as the anode, to prepare an electrodeposition bath and the ground lower half of the substrate was immersed in the bath to serve as the cathode. Electrodeposition coating was carried out until a dry film thickness of 15 µm had been attained. After this electrocoating, the substrate was withdrawn from the electrodeposition bath in the stainless steel vessel, cleaned with water, and heated in a drying oven at a controlled temperature of 180°C for 30 minutes to provide a test plate 1 carrying a cationic electrodeposited coating film on the surface of the lower half of the substrate.

### Example 2

Except that, instead of dipping in the surface conditioner, the substrate was dipped in an acid cleaner (a 3 weight % aqueous solution of Surf Cleaner 355A, product of Nippon Paint Co.) at 45°C for 120 seconds and that, instead of dipping in the zinc phosphate surface treating bath, the substrate was dipped in a zirconic acid surface treating bath (a 2 weight % aqueous solution of Alsurf 301N-1, product of Nippon Paint Co.) at 45°C for 60 seconds to a coat weight of 20 to 50 mg/m², the procedure of Example 1 was otherwise repeated to provide a test plate 2 carrying a cationic electrodeposited coating film on the surface of the lower half of the substrate.

### Comparative Example 1

Except that, instead of the cationic electrodeposition coating composition obtained in Production Example 1, Power Top U-30 (a blocked isocyanate curable epoxy resin cationic electrodeposition coating, product of Nippon Paint Co.) was used, the procedure of Example 1 was otherwise repeated to provide a test plate 3 carrying a cationic electrodeposited coating film on the surface of the lower half of the substrate.

### Comparative Example 2

Except that, instead of the cationic electrodeposition coating composition obtained in Production Example 1, Power Top U-30 (a blocked isocyanate curable epoxy resin cationic electrodeposition coating, product of Nippon Paint Co.) was used, the procedure of Example 2 was otherwise repeated to provide a test plate 4 carrying a cationic electrodeposited coating film on the surface of the lower half of the substrate.

### Comparative Example 3

The substrate obtained in Example 1 was further subjected to a chemical conversion by dipping in an aftertreatment agent bath (a 0.5 weight % aqueous solution of Surf Lite 80MZ, product of Nippon Paint Co.) at 25°C for 30 seconds. Then, except that Power Top U-30 (a blocked isocyanate curable epoxy resin cationic electrodeposition coating, product of Nippon Paint Co.) was used instead of the cationic electrodeposition coating composition obtained in Production Example 1, the procedure of Example 1 was otherwise repeated to provide a test plate 5 carrying a cationic electrodeposited coating film on the surface of the lower half of the substrate.

### <Evaluation tests>

The test plates 1 through 5 obtained in Examples 1 and 2 and Comparative Examples 1 to 3, respectively, were evaluated for the following parameters. The results are shown in Table 1.

### Filiform-rust resistance

Using an NT cutter, each test plate was scored in a cross of two 10 cm-long cuts. The scored plate was dipped in 0.5 mol/1 hydrochloric acid solution for 10 seconds and, then, transferred to an incubator controlled at 40°C and 70 to 75% R.H., in which it was allowed to sit for 240 hours. Using the above procedure as one cycle, a total of 5 cycles were carried out. The length of the filiform rust which had developed on the surface was measured and the coated film appearance of the test plate was evaluated. The following evaluation criteria were used.
- O:: The length of filiform rust per 10 cm of crosscut (L): ≤15 mm; no abnormality of appearance.
- Δ:: The length of filiform rust per 10 cm of crosscut (L): 15 mm ≤ L < 18 mm; no abnormality of appearance.
- X:: The length of filiform rust per 10 cm of crosscut (L) : >18 mm or an abnormal appearance.

### Environment-applicability

The test plate was evaluated for possible contamination with heavy metals.
- O :: Neither chromium nor lead is detected.
- X:: Chromium or lead is detected.

**Table 1**

| | Example 2 | | Comparative Example 3 | | |
|---|---|---|---|---|---|
| | 1 | 2 | 1 | 2 | 3 |
| Filiform-rust resistance | ○ | ○ | × | Δ | ○ |
| Environment-applicability | ○ | ○ | × | × | × |

It is apparent from Table 1 that, by using the cationic electrocoating method according to the first aspect of the present invention, a coated aluminum article with excellent filiform-rust resistance and corrosion resistance can be obtained without use of a heavy metal-containing surface treating reagent.

### Example 3

The lower half of an aluminum-magnesium alloy (5052) plate (75 x 150 x 0.8 mm) was ground with an air sander (manufactured by URYU Co., Type UP-25DB) at a max. speed of 9000 rpm, a pad. size of 125 mm, and a max. pressure of 6 kg/cm² and further ground evenly with sandpaper (product of Sankyo Rikagaku; high-pitch paper, grit 80, HAND type, size 125 mm). The ground part was cleaned with water to remove grindings and dried to provide a substrate.

The cationic electrodeposition coating composition obtained in Production Example 1 was transferred to a stainless steel vessel, which was to serve as the anode, to prepare an electrodeposition bath and the ground lower half of the substrate was immersed in the bath to serve as the cathode. Electrodeposition coating was carried out until a dry film thickness of 15 µm had been attained. After this electrocoating, the substrate was withdrawn from the electrodeposition bath in the stainless steel vessel, cleaned with water, and heated in a drying oven at a controlled temperature of 180°C for 30 minutes to provide a test plate 6 carrying a cationic electrodeposited coating film on the surface of the lower half of the substrate.

### Example 4

Except that a substrate was used as prepared by further degreasing the substrate by dipping in a degreasing bath (a 2 weight % aqueous solution of Surf Cleaner 53, product of Nippon Paint Co.) at 50°C for 120-180 seconds, instead of same substrate as used in Example 3, the procedure of Example 3 was otherwise repeated to provide a test plate 7 carrying a cationic electrodeposited coating film on the surface of the lower half of the substrate.

### Comparative Example 4

Except that Power Top U-30 (a blocked isocyanate curable epoxy resin cationic electrodeposition coating, product of Nippon Paint Co.) was used instead of the cationic electrodeposition coating composition obtained in Production Example 1, the procedure of Example 3 was otherwise repeated to provide a test plate 8 carrying a cationic electrodeposited coating film on the surface of the lower half of the substrate.

### Comparative Example 5

Except that Power Top U-30 (a blocked isocyanate curable epoxy resin cationic electrodeposition coating, product of Nippon Paint Co.) was used instead of the cationic electrodeposition coating composition obtained in Production Example 1, the procedure of Example 4 was otherwise repeated to provide a test plate 9 carrying a cationic electrodeposited coating film on the surface of the lower half of the substrate.

### Comparative Example 6

Except that a chromated substrate was used as prepared by degreasing the substrate by dipping in a degreasing bath (a 2 weight % aqueous solution of Surf Cleaner 53, product of Nippon Paint Co.) prewarmed to 50°C for 160 seconds and further subjecting it to a surface treatment by dipping in a surface treating bath (a 2 weight % aqueous solution of Al Surface 1200, product of Nippon Paint Co.) prewarmed to 35°C until a coat weight (total chromium amount) of 200 mg/m² had been attained, instead of same substrate as used in Comparative Example 3, the procedure of Comparative Example 3 was otherwise repeated to provide test plate 10 carrying a cationic electrodeposited coating film on the surface of the lower half of the substrate.

### Evaluation Tests

The test plates 6 through 10 obtained in Examples 3 and 4 and comparative Examples 4-6, respectively, were evaluated for filiform-rust resistance and environment-applicability as above and, in addition, for the following parameters. The evaluation results are shown in Table 2.

### <Corrosion Resistance>

Using an NT cutter, the test plate was scored in a cross of two 10 cm-long cuts. Then, in accordance with JIS-Z-2371, a salt spray test (a 5 weight % aqueous solution of sodium chloride, 35°C × 1500 hrs) was performed. The test plate withdrawn was evaluated for rusted surface peeling. The following evaluation criteria were used.
- O :: The maximum width of rusted surface peeling on one side (W) : ≤1.5 mm.
- Δ:: The maximum width of rusted surface peeling on one side (W): 2.0 mm ≥ W > 1.5 mm
- X:: The maximum width of rusted surface peeling on one side (W) : > 2.0 mm

**Table 2**

| | Example | | Comparative Example | | |
|---|---|---|---|---|---|
| | 3 | 4 | 4 | 5 | 6 |
| Filiform-rust resistance | ○ | ○ | × | × | ○ |
| Corrosion resistance | ○ | ○ | × | Δ | ○ |
| Environment-applicability | ○ | ○ | × | × | × |

It is apparent from Table 2 that, by using the cationic electrocoating method according to the second aspect of the present invention, a coated aluminum article with excellent filiform-rust resistance and corrosion resistance can be obtained without use of a harmful metal-containing surface treating reagent.

## Claims

1. A cationic electrocoating method comprising electrocoating a surface of an aluminum substrate with a cationic electrodeposition coating composition,
wherein said aluminum substrate is subjected to a chemical conversion with a surface treating reagent not containing a heavy metal, and
wherein said cationic electrodeposition coating composition contains a sulfonium- and propargyl-containing resin composition.

2. The cationic electrocoating method according to Claim 1,
wherein said heavy metal is chromium.

3. The cationic electrocoating method according to Claim 1 or 2,
wherein the surface of said aluminum substrate is degreased.

4. The cationic electrocoating method according to any of Claims 1 to 3,
wherein said cationic electrodeposition coating composition contains 5 to 400 mmol of the sulfonium group and 10 to 495 mmol of the propargyl group per 100 g solids of said resin composition and the total content of the sulfonium and propargyl groups is not more than 500 mmol per 100 g solids.

5. The cationic electrocoating method according to any of Claims 1 to 3,
wherein said cationic electrodeposition coating composition contains 5 to 250 mmol of the sulfonium group and 20 to 395 mmol of the propargyl group per 100 g solids of said resin composition and the total content of the sulfonium and propargyl groups is not more than 400 mmol per 100 g solids.

6. The cationic electrocoating method according to any of Claims 1 to 5,
wherein some of the propargyl groups of the resin composition in said cationic electrodeposition coating composition are in the form of acetylides.

7. The cationic electrocoating method according to any of Claims 1 to 6,
wherein said resin composition comprises an epoxy resin as a skeleton.

8. The cationic electrocoating method according to Claim 7,
wherein said epoxy resin is a novolac cresol epoxy resin or a novolac phenol epoxy resin and
has a number average molecular weight of 700 to 5000.

9. A coated article obtainable by the cationic electrocoating method according to any of Claims 1 to 8.

10. A cationic electrocoating method comprising electrocoating a surface of an aluminum substrate with a cationic electrodeposition coating composition,
wherein said aluminum substrate is not subjected to a chemical conversion with a surface treating reagent, and
wherein said cationic electrodeposition coating composition contains a sulfonium- and propargyl-containing resin composition.

11. The cationic electrocoating method according to Claim 10,
wherein the surface of said aluminum substrate is degreased.

12. The cationic electrocoating method according to Claim 10 or 11,
wherein said cationic electrodeposition coating composition contains 5 to 400 mmol of the sulfonium group and 10 to 495 mmol of the propargyl group per 100 g solids of said resin composition and the total content of the sulfonium and propargyl groups is not more than 500 mmol per 100 g solids.

13. The cationic electrocoating method according to Claim 10 or 11,
wherein said cationic electrodeposition coating composition contains 5 to 250 mmol of the sulfonium group and 20 to 395 mmol of the propargyl group per 100 g solids of said resin composition and the total content of the sulfonium and propargyl groups is not more than 400 mmol per 100 g solids.

14. The cationic electrocoating method according to any of Claims 10 to 13,
wherein said resin composition comprises an epoxy resin as a skeleton.

15. The cationic electrocoating method according to Claim 14,
wherein said epoxy resin is a novolac cresol epoxy resin or a novolac phenol epoxy resin and
has a number average molecular weight of 700 to 5000.

16. A coated article obtainable by the cationic electrocoating method according to any of Claims 10 to 15.
